# EUROPEAN PATENT SPECIFICATION

(11) **EP 2 815 668 B1**
(45) Date of publication and mention of the grant of the patent: **06.02.2019**
(21) Application number: 12868845.4
(22) Date of filing: 17.02.2012
(51) Int. Cl.: A43B 23/02, B29D 35/14, A43B 7/14, A43C 1/00, B29D 35/06, B29D 35/08

(54) **SHOE AND MANUFACTURING METHOD THEREFOR**
SCHUH UND HERSTELLUNGSVERFAHREN DAFÜR
CHAUSSURE ET SON PROCÉDÉ DE FABRICATION

(43) Date of publication of application: 24.12.2014
(73) Proprietor: ASICS Corporation, Kobe-shi, Hyogo 650-8555 (JP)
(72) Inventor: TANIGUCHI, Norihiko, Kobe-shi, Hyogo 650-8555 (JP); MORIYASU, Kenta, Kobe-shi, Hyogo 650-8555 (JP)
(74) Representative: Vossius & Partner Patentanwälte Rechtsanwälte mbB
(86) International application number: PCT/JP2012/053817
(87) International publication number: WO 2013/121578

(56) References cited:
- EP-A1- 1 511 615
- EP-A1- 1 864 584
- FR-A1- 2 484 215
- GB-A- 502 685
- JP-A- 2003 265 202
- JP-A- 2007 050 157
- JP-A- 2009 148 477
- US-A- 2 147 197
- US-A- 5 678 329

## Description

### TECHNICAL FIELD

The present invention relates to a shoe using a sock-shaped upper member, and a manufacturing method therefor.

### BACKGROUND ART

In recent years, it has been proposed to form a sock-shaped upper member by a knitting machine or a weaving machine (see for example JP2004-105323A (Abstract) or FR 2 484 215 A1) .

### SUMMARY OF INVENTION

A sock-shaped upper member of this type typically has a small rigidity and needs to be reinforced. However, since the upper member is sock-shaped, it is difficult to sew a reinforcement member thereto.

Such a problem arises also with members other than the upper members produced by a knitting machine, or the like, as long as they are sock-shaped upper members having a small rigidity.

It is therefore an object of the present invention to provide a shoe using a sock-shaped upper member having a small rigidity having such a structure that the upper member can be easily reinforced, and a manufacturing method therefor.

A shoe according to a first aspect and which does not form part of the present invention includes an upper 12, the upper 12 including:
a sock-shaped base member 1 of a knit fabric, a knit-like fabric and/or a woven fabric; and
a reinforcement member 2 integral with the base member 1, the reinforcement member 2 being substantially not sewn (substantially without sewn) to the base member 1, and the reinforcement member 2 being bonded and/or welded to a surface of the base member 1. Herein, "substantially not sewn to (substantially without sewn to)" means that "portions of the reinforcement member around or near eyelets or portions thereof around or near loops may be sewn to the base member 1". Where there is a plurality of reinforcement members, only some of them may be sewn.

In the present aspect, the upper 12 is reinforced by the reinforcement member 2, with the reinforcement member 2 being bonded or welded to, but not sewn to, the sock-shaped base member 1. Therefore, the sock-shaped base member 1 of a knit fabric, a knit-like fabric and/or a woven fabric, which is difficult to retain its shape, can be attached to the last, and the reinforcement member 2 can easily be integrated with the base member 1 via bonding or welding, thereby facilitating the production of the upper 12.

In the present invention, a sock-shaped knit fabric or woven fabric can be produced by a well-known knitting machine or weaving machine.

A knit-like fabric means a fabric having a macroscopically-reticulated fabric structure, i.e., a lattice structure, and such a case is also encompassed by the present invention because the base member 1 is flexible and has a small rigidity.

Sock-shaped means a tubular shape that is open at least at the top line (mouth), while it may be open also in portions other than the top line, e.g., instep or toe portions, as long as it is shaped so that it can be attached to the last.

The reinforcement member 2 is less stretchable than the sock-shaped base member 1, and may typically be a non-stretchable member.

A shoe includes a sock-shaped base member 1 of a knit fabric, a knit-like fabric and/or a woven fabric forming a portion of an upper 12, and a sole member 3, 4 made of a resin bonded and/or welded to a bottom surface of the base member 1.

In the second aspect, the sole member 3, 4 is bonded or welded to the bottom surface of the sock-shaped base member 1. This facilitates the production of the shoe.

### BRIEF DESCRIPTION OF DRAWINGS

FIGS. **1A, 1B** and **1C** are side views showing a base member, a reinforcement member and a sole member, respectively, according to Example 1.
FIGS. **2A** and **2B** are a side view and a transverse cross-sectional view, respectively, showing a shoe of Example 1.
FIGS. **3A** and **3B** are a side view and a plan view, respectively, showing a shoe of Example 2.
FIGS. **4A** and **4B** are side views showing shoes of Examples 3 and 4, respectively.
FIGS. **5A, 5B** and **5C** are side views showing a base member, a sole member and a shoe, respectively, according to Example 5 of the present invention.
FIGS. **6A, 6B** and **6C** are a side view, a plan view and a transverse cross-sectional view, respectively, showing a shoe according to Example 6, and FIG. **6D** is a transverse cross-sectional view showing a shoe according to Example 7.
FIGS. **7A** and **7B** are a side view and a plan view, respectively, showing a shoe according to Example 8.
FIGS. **8A, 8B, 8C, 8D** and **8E** are step diagrams showing an example of a manufacturing method of the present invention.
FIGS. **9A, 9B, 9C, 9D** and **9E** are step diagrams showing another example of a manufacturing method of the present invention.
FIGS. **10A, 10B** and **10C** are step diagrams showing the other example.
FIG. **11** is a side view useful in understanding still another manufacturing method.

### DESCRIPTION OF EMBODIMENTS

In a preferred embodiment of the first aspect, the reinforcement member 2 covers a portion of a side surface of a foot.

In a further preferred embodiment of the first aspect, the reinforcement member 2 covers a portion of each of a front foot section, a middle foot section and a rear foot section on the opposite side surfaces.

In this case, the side surface of the base member 1 is reinforced by the reinforcement member 2 in the front foot section, the middle foot section and the rear foot section, thereby making it possible to support the foot by the upper 12 even if the base member 1 has a small rigidity.

In a further preferred embodiment of the first aspect, the reinforcement member 2 covers a portion of the bottom surface of the foot and continuously extends from the bottom surface onto the opposite side surfaces.

In this case, the reinforcement member 2 continuously extending from the bottom surface onto the side surfaces is continuous in the foot-circumference direction, thereby stabilizing the support of the foot.

In a further preferred embodiment of the first aspect, the reinforcement member 2 covers the bottom surface of the middle foot section.

In a further preferred embodiment of the first aspect, in the middle foot section, the reinforcement member 2 continuously extends from the bottom surface onto the opposite side surfaces.

In this case, the reinforcement member 2, which is continuous in the foot-circumference direction in the middle foot section, further stabilizes the support of the foot.

In a further preferred embodiment of the first aspect, the reinforcement member 2 includes a lacing loop 20 integrally formed along an upper edge of the reinforcement member 2.

In this case, a shoelace is passed through a loop 20 along the upper edge of the middle foot section, and the upper member 12 is fitted to the foot via the reinforcement member 2, which continuously extends from the bottom surface onto the opposite side surfaces in the middle foot section. Therefore, even if the rigidity of the base member 1 is small, the support of the foot is stabilized by the upper member 12.

In a further preferred embodiment of the first aspect, the reinforcement member 2 includes an ornamental eyelet 21 integrally formed along an upper edge of the reinforcement member 2.

In this case, a shoelace is passed through a lacing aperture formed in the ornamental eyelet along the upper edge of the middle foot section, and the upper member 12 is fitted to the foot via the reinforcement member 2, which continuously extends from the bottom surface onto the opposite side surfaces in the middle foot section. Therefore, even if the rigidity of the base member 1 is small, the support of the foot is stabilized by the upper member 12.

In a further preferred embodiment of the first aspect, the reinforcement member 2 covers a circumference of a top line.

In this case, the circumference of the top line is reinforced by the reinforcement member 2, thereby making the top line less deformable and further stabilizing the support of the foot.

In a further preferred embodiment of the first aspect, the reinforcement member 2 includes a pair of side surface portions **2f** and **2f** extending in an up-down direction along each of a medial-side surface and a lateral-side surface of a middle foot section, a lower portion **2e** extending in a front-rear direction in a lower portion of the side surfaces, and an ornamental eyelet **21** extending in the front-rear direction along an instep of the foot and having a plurality of lacing apertures **20A;** and a portion of the base member 1 is enclosed, over an entire circumference thereof, by the pair of side surface portions **2f** and **2f,** the lower portion **2e** and the ornamental eyelet **21.**

In this case, a portion of the base member 1 is enclosed by the reinforcement member 2 in the middle foot section, thereby stabilizing the support in the middle foot section.

In this case, in a further preferred embodiment, the lacing apertures **20A** are provided near upper ends of side surface portions **2f** and **2f** extending from the lower portion **2e** toward the ornamental eyelet **21.**

A shoelace passed through the lacing apertures **20A** pulls up the lower portion **2e** via the side surface portions **2f** and **2f.** As described above, since a portion of the base member 1 is enclosed by the reinforcement member 2, the upper **12** including the base member 1 and the reinforcement member 2 is likely to fit to the foot in the middle foot section.

In a preferred embodiment of the second aspect, the resin is a foamed material such as ethylene-vinyl acetate copolymer (EVA), a urethane-based material, a styrene-based material, an olefin-based material, etc., and the sole member is a midsole member 3.

In this case, the midsole member 3 made of EVA, or the like, can be easily formed on the bottom surface of the upper.

In a further preferred embodiment of the second aspect, the midsole member 3 covers a portion of each side surface of the foot.

In this case, the midsole member 3 supports the opposite side surfaces of the foot, thereby stabilizing the support of the foot, and it is possible to easily produce a shoe in which the midsole member 3 is rolled up on the side surface of the foot.

In a further preferred embodiment of the second aspect, the midsole member covers opposite side surfaces of a middle foot section, and a lacing aperture is formed along an upper edge of the midsole member 3.

In this case, since the midsole member 3 typically has a greater rigidity than the base member 1, and the lacing aperture is formed along an upper edge of the midsole member 3 having a great rigidity, the base member 1 can be fitted to the foot together with the midsole member 3 by pulling up the midsole member 3 by means of a shoelace, or the like. Therefore, even with the base member 1 having a small rigidity, the upper and the sole are likely to fit to the foot, and the foot is supported from the opposite side surfaces by means of the midsole member 3, thereby stabilizing the support of the foot.

In a further preferred embodiment of the second aspect, a heel counter 33 is integrally formed with the midsole member 3.

In this case, since the heel counter 33 is formed integrally continuously with the sole by means of the midsole member 3, it is possible to realize a stable support of the heel of the foot even with the base member 1 having a small rigidity.

In a further preferred embodiment of the second aspect, the midsole member 3 covers a circumference of a top line.

In this case, since the circumference of the top line is covered by the midsole member 3 having a greater rigidity than the base member 1, the shape of the top line is more likely to be retained.

In a further preferred embodiment of the second aspect, the sole member 3 includes a pair of side surface portions 3f and 3f extending in an up-down direction along each of a medial-side surface and a lateral-side surface of a middle foot section of a foot, a roll-up lower portion 3e rolled up from a bottom surface and extending in a front-rear direction in a lower portion of the side surfaces, and an upper edge portion 31 extending in a front-rear direction along an instep of the foot and having a plurality of lacing apertures **30A;** and a portion of the base member 1 is enclosed, over an entire circumference thereof, by the pair of side surface portions **3f** and **3f,** the roll-up lower portion **3e** and the upper edge portion 31.

In this case, since a portion of the base member 1 is enclosed by the sole member 3 in the middle foot section, the support of the middle foot section is stabilized.

In this case, in a further preferred embodiment, the lacing apertures **20A** are provided near upper ends of the side surface portions **3f** and **3f** extending from the lower portion **3e** toward the upper edge portion 31.

A shoelace passed through the lacing apertures **30A** pulls up the lower portion **3e** via the side surface portions **3f** and **3f.** As described above, since a portion of the base member 1 is enclosed by the sole member 3, the upper 12 including the base member 1 and the sole member 3 is likely to fit to the foot in the middle foot section.

Each of the shoes described above is produced by the following manufacturing method, for example.

That is, an aspect of the method of the present invention includes the steps of:
attaching a sock-shaped base member 1 forming a portion of an upper to a last portion **52** of a core **50,** the core **50** including a core print **51** and the last portion **52;**
loading the core **50** onto an outer mold **61, 62;**
supplying a molten resin **71, 72** to be a reinforcement member 2 and/or a sole member 3, 4 into between the outer mold **61, 62** and the base member 1; and
allowing the molten resin **71, 72** to cure, thereby forming the reinforcement member 2 and/or the sole member 3, 4 integral with the base member 1.

In this case, it is possible to manufacture a shoe in which the reinforcement member 2 or the midsole member 3 is integral with the base member 1 only by performing the process of attaching the base member 1 to the last (the core **50**) having the core print **51,** and further loading the core **50** onto the outer mold **61, 62.** Therefore, the shoe manufacture can be automated, and it is therefore possible to reduce the manufacturing cost.

Note that the base member 1 may be a sock that is stretchable and that does not shrink by heat. That is, the base member 1 may be any member as long as it can be attached to the last and it fits to the last.

Note that in the present aspect, the base member 1 may be a sock of a woven cotton that is stretchable and that does not shrink by heat. That is, the present aspect can be used as long as the upper member can be attached to the last and it fits to the last.

Preferably, in the step of loading the core **50,** the core print **51** of the core **50** is supported by the outer mold **61, 62,** with the core print **51** protruding from a top line of the base member 1.

More preferably, the loading step is performed with the core **50** positioned so that the core print **51** is below the last portion **52.**

In this case, the core print **51** is supported by the outer mold **61,** and the core **50** is stably supported by the outer mold **61.**

More preferably, the outer mold **61, 62** includes a first outer mold **61,** to which the core print **51** is attached, and a second outer mold **62** meshing with the first outer mold **61,** the method including:
a first supply step of supplying a first molten resin **71** to be the reinforcement member 2 into between the first outer mold **61** and the second outer mold **62** and the last portion **52;**
a step of allowing the first molten resin **71** to cure, thereby forming the reinforcement member 2 integral with the base member 1;
a step of meshing a third outer mold **63,** which meshes with the first outer mold **61,** onto the first outer mold **61,** replacing the second outer mold **62;**
a second supply step of supplying a second molten resin **72** to be the sole member 3, 4 into between the third outer mold **63** and the last portion **52;** and
a step of allowing the second molten resin 72 to cure, thereby forming the sole member 3, 4 integral with the base member 1.

In this case, the manufacture of a shoe in which the reinforcement member 2 and the midsole member 3 are formed integral with the base member 1 can be automated, and it is therefore possible to significantly reduce the manufacturing cost.

More preferably, in the meshing step after the first supply step, the second outer mold **62** is removed, with the core print **51** remaining attached to the first outer mold **61,** and the third outer mold **63** is meshed onto the first outer mold **61,** replacing the second outer mold **62.**

In this case, it is possible to form the midsole member 3, following the reinforcement member 2, integral with the base member 1, with the core print **51** remaining attached to the first outer mold **61.**

Another aspect of the present invention includes the steps of
attaching a sock-shaped base member 1 made of a knit fabric and/or a woven fabric forming a portion of an upper to a last and heating the sock-shaped base member 1, thereby forming a sock portion; and
heating a sole member **3A** made of a knit fabric and/or a woven fabric integral with the base member 1 during the heating of the base member 1, thereby melting the sole member **3A.**

In this case, it is possible to manufacture a shoe in which the sole is integral with the base member 1 only by attaching the base member 1 to the last and heating the base member 1, and it is therefore possible to further reduce the manufacturing cost.

The present invention will be understood more clearly from the following description of preferred examples taken in conjunction with the accompanying drawings. Note however that the examples and the drawings are merely illustrative and should not be taken to define the scope of the present invention. The scope of the present invention shall be defined only by the appended claims. In the accompanying drawings, like reference numerals denote like components throughout the plurality of figures.

### Examples

Examples will now be described with reference to the drawings.

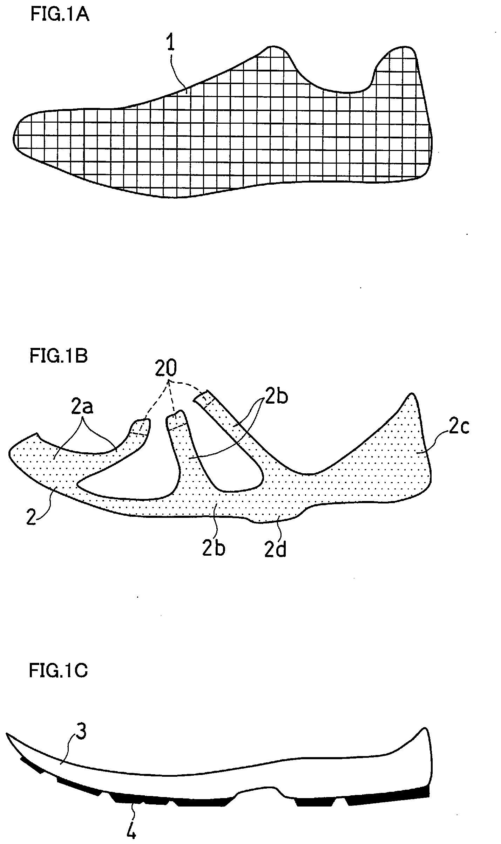

FIGS. **1A** to **2A** show Example 1.

As shown in FIGS. **1A** to **1C****,** the shoe includes the base member 1, the reinforcement member 2, the midsole member 3, and an outsole 4. Note that in the drawings to be discussed below, the base member 1 is shown to be lattice-patterned, the reinforcement member 2 is shown to be dotted, and the outsole 4 is shown to be in solid black.

The base member 1 of FIG. **1A** is formed in a sock shape by a knit fabric, a knit-like fabric and/or a woven fabric.

Herein, a knit fabric or a woven fabric can be produced by a well-known knitting machine or weaving machine, and can be formed by a synthetic resin fiber that shrinks by heat. An example of the base member 1 is disclosed in JP2004-105323A, the content of which is herein incorporated by reference in its entirety.

For example, the base member 1 may be obtained by weaving a member into a sock shape by a weaving machine, attaching the member to the last and heating the member so as to thermally shrink the member into a shape conforming to the last, and such a member is used as a portion of the upper.

The knit-like fabric is a web molded into a knit-like configuration, in which case it easily fits to the shape of the last because it is knit-like.

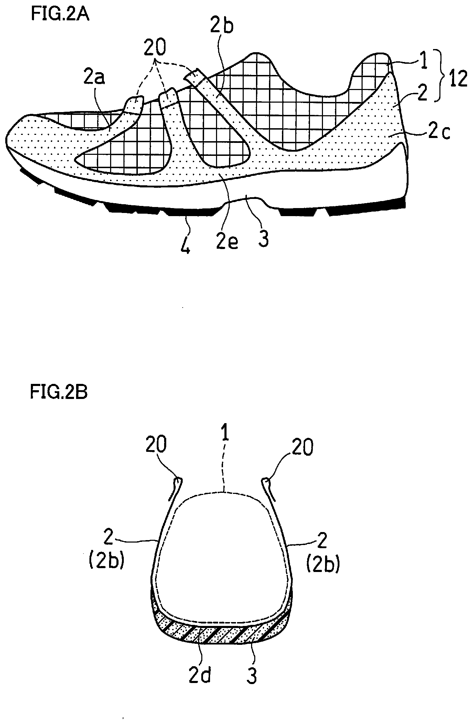

The reinforcement member 2 is not substantially sewn to the base member 1, and the reinforcement member 2 is bonded and/or welded to the surface of the base member 1, thereby forming the upper 12 of FIG. **2A****,** in which the reinforcement member 2 is integral with the base member 1. Such a reinforcement member 2 may be a planar member obtained by die-cut, or a member that is three-dimensionally molded into a predetermined shape, or the base member 1 may be insert-molded during the molding process as will be described later.

The reinforcement member 2 may be bonded to the base member 1 with an adhesive or welded thereto, or a portion of the reinforcement member 2 may be bonded to the base member 1 while another portion of the reinforcement member 2 is welded to the base member 1.

The reinforcement member 2 may be of a stretchable material or a less stretchable material, or it may also be of a foamed material such as EVA, which is used in the midsole. Typically, the reinforcement member 2 uses a material that is less stretchable than the base member 1.

That is, the reinforcement member 2 has a greater rigidity than the base member 1, and the tensile rigidity of the reinforcement member 2, for example, is greater than that of the base member 1.

As shown in FIG. **2A****,** on the medial-side surface and on the lateral-side surface, the reinforcement member 2 has a front foot portion 2a, a middle foot portion **2b** and a rear foot portion **2c** covering portions of the front foot section, the middle foot section and the rear foot section, respectively. As shown in FIG. **2B****,** the reinforcement member 2 includes a bottom portion **2d** covering a portion of the bottom surface of the middle foot section, and it continuously extends from the bottom surface onto the opposite side surfaces in the middle foot section as shown in FIG. **2B****.** The bottom portion **2b** may be continuously extending completely across the bottom surface of the middle foot section.

Note that where the reinforcement member 2 is welded to the base member 1 by molding, the reinforcement member 2 may cover the entire surface of the base member 1.

As shown in FIGS. **2A** and **2B****,** the reinforcement member 2 includes lacing loops **20** integrally formed along the upper edge of the reinforcement member 2.

Note that the structure of the medial-side surface and that of the lateral-side surface are substantially approximate to each other, and only one of the side surfaces is shown in each side view.

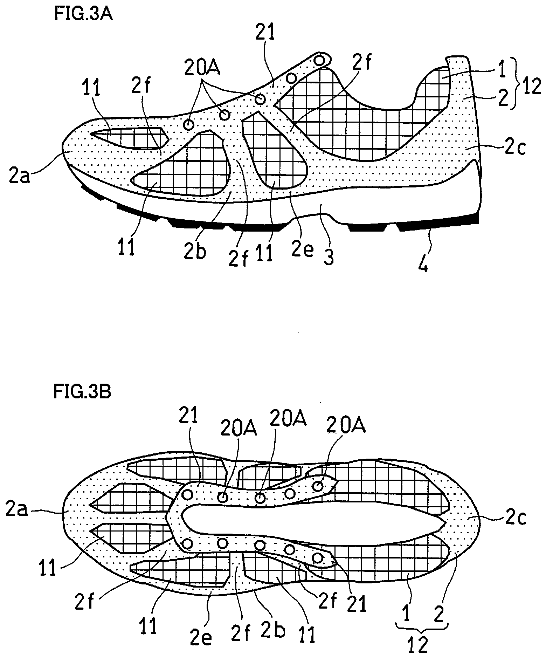

Note that as shown in FIGS. **3A** and **3B****,** the reinforcement member 2 may include the ornamental eyelet **21** integrally formed along the upper edge of the reinforcement member 2. In this case, eyelet apertures to be the lacing apertures **20A** may be formed in the ornamental eyelet 21. A portion of the reinforcement member 2 may form a moon-shaped core (heel counter), for example, covering the rear surface of the heel.

In the example of FIGS. **3A** and **3B****,** the reinforcement member 2 includes loop-shaped portions in the front foot section and the middle foot section so as to enclose the entire circumferences of enclosed portions 11 of the base member 1, thereby realizing a stable support of the foot by means of the reinforcement member 2 even with the base member 1 having a small rigidity.

Each loop-shaped portion of the reinforcement member 2 is formed by the ornamental eyelet **21,** the lower portion **2e,** and a pair of side surface portions **2f** connecting between the ornamental eyelet 21 and the lower portion **2e,** thereby enclosing the circumference of an enclosed portion 11 of the base member 1.

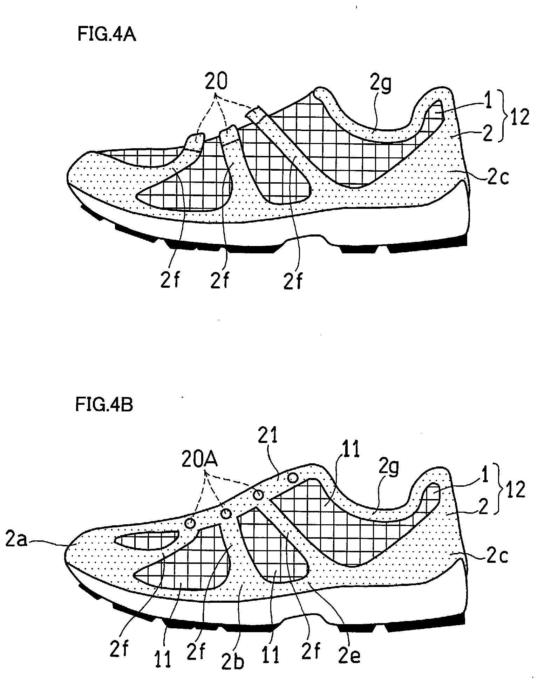

As shown in FIGS. **4A** and **4B****,** the reinforcement member 2 has a top line portion **2g** covering the side surface and the rear surface of the top line.

As shown in FIG. **4B****,** the top line portion **2g** and the lower portion **2e** may be connected together by the rear foot portion **2c** and the side surface portions **2f** and **2f,** thereby forming an enclosed portion 11 where the base member 1 is enclosed by the reinforcement member 2 also in the rear foot portion **2c.**

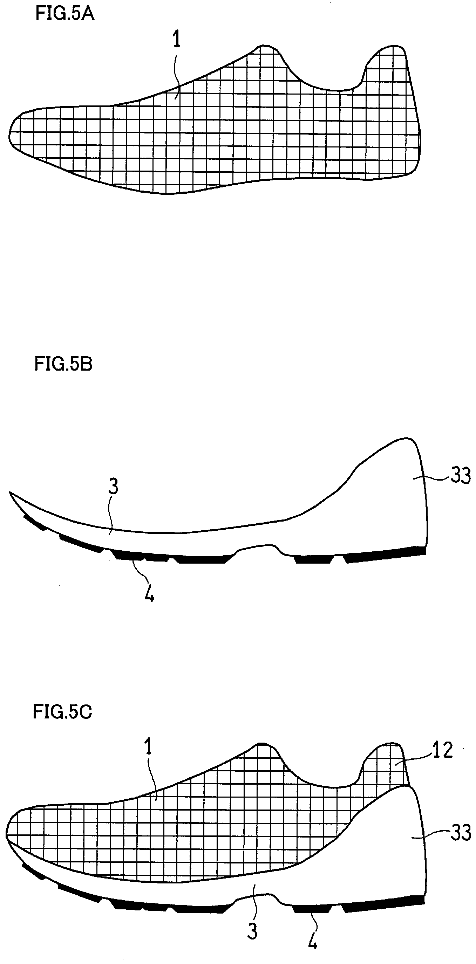

In FIGS. **5A** to **5C****,** the base member 1 is reinforced by the midsole member 3 in this example. That is, in this example, the shoe includes the sock-shaped base member 1 of a knit fabric, a knit-like fabric and/or a woven fabric forming a portion of the upper **12,** and the midsole member 3 and the outsole 4 made of a resin bonded and/or welded to the bottom surface of the base member 1. The resin of the midsole member 3 is made of a foamed material such as ethylene-vinyl acetate copolymer EVA.

The heel counter 33 is formed integral with the midsole member 3. The heel counter 33 covers the rear surface and the opposite side surfaces of the foot in the rear foot section of the foot. The midsole member 3 has a greater rigidity than the base member 1, and the tensile rigidity of the midsole member 3, for example, is greater than that of the base member 1.

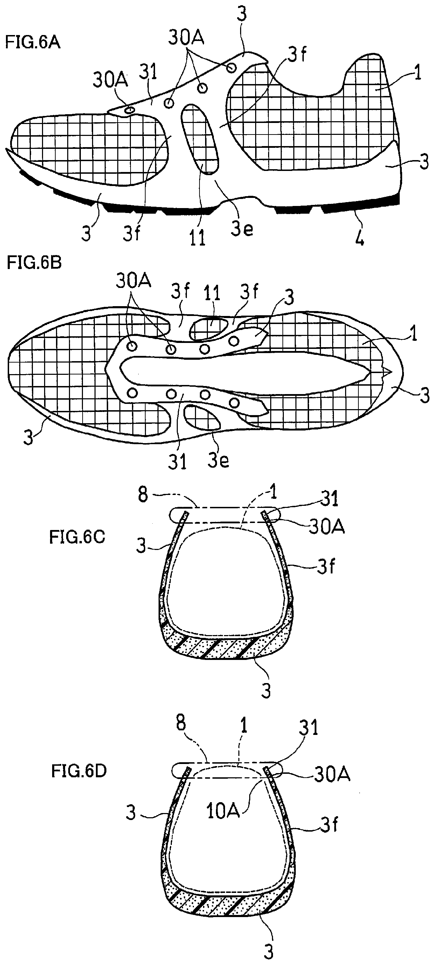

As shown in FIGS. **6A** to **6D****,** the midsole member 3 covers the opposite side surfaces of the foot in the middle foot section, for example. An upper edge portion 31 including lacing apertures **30A** formed therein may be formed integrally along the upper edge of the midsole member 3.

In the example of FIGS. **6A** and **6B****,** the midsole member 3 includes loop-shaped portions provided in the middle foot section, for example, so as to enclose the entire circumferences of enclosed portions 11 of the base member 1, thereby realizing a stable support of the foot by the means of midsole member 3 even with the base member 1 having a small rigidity.

Each loop-shaped portion of the midsole member 3 is formed by the upper edge portion 31, a roll-up lower portion **3e,** and a pair of side surface portions **3f** connecting between the upper edge portion 31 and the roll-up lower portion **3e,** thereby enclosing the circumference of an enclosed portion 11 of the base member 1.

As shown in FIG. **6D****,** the lacing apertures **30A** may match lacing apertures **10A** formed in the base member 1. In this case, the lacing apertures **10A** are formed in advance in the base member 1, and the upper edge portion 31 is bonded or welded to the base member 1.

On the other hand, as shown in FIG. **6C****,** the upper edge portion 31 including the lacing apertures **30A** may be protruding above the base member 1, with the upper edge portion 31 being not attached to the base member 1. In this case, eyelet members may be attached to the lacing apertures **30A** of the midsole member 3.

Note that a shoelace 8 is denoted by a two-dot chain line in FIGS. **6C** and **6D****.**

In the example of FIG. **6C****,** where the midsole member 3 is welded to the base member 1, a release agent may be applied to an upper portion of the base member 1 so that the upper edge portion 31 and the base member 1 will be left unwelded.

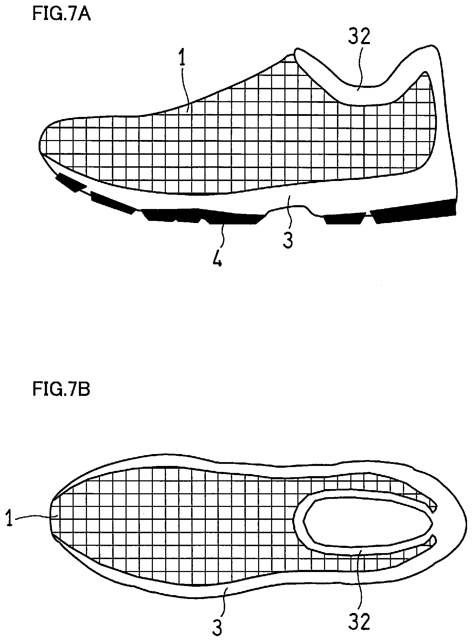

As shown in FIGS. **7A** and **7B****,** the midsole member 3 may include a top line portion 32 covering the side surface and the rear surface of the top line.

Next, a method for manufacturing a shoe having such a structure as described above will be described.

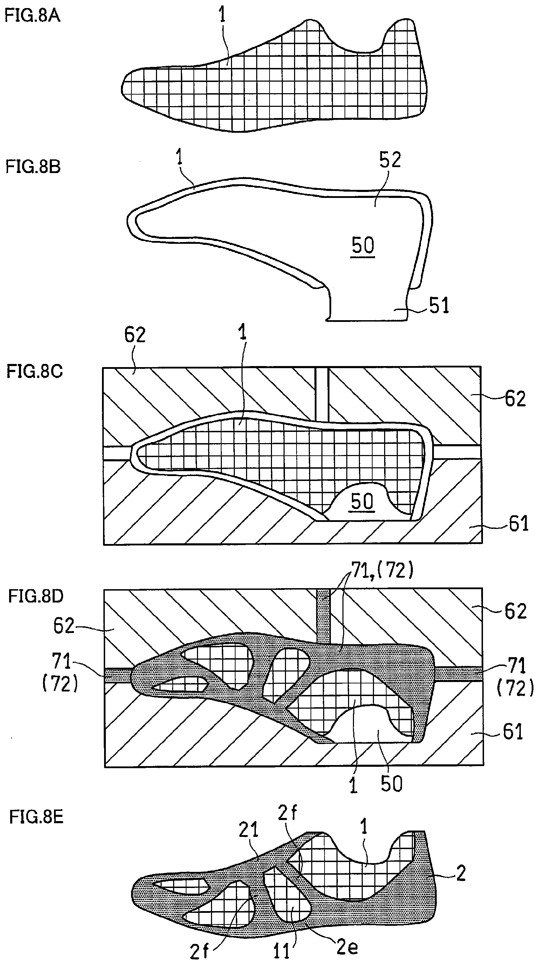

FIGS. **8A** to **8E** show an example of the method.

First, the sock-shaped base member 1 forming a portion of the upper shown in FIG. **8A** is provided, and the sock-shaped base member 1 is attached to the last portion **52** of the core **50** of FIG. **8B****,** the core **50** including the core print **51** and the last portion **52.** Upon attachment, the core print **51** of the core **50** is protruding from the top line of the base member 1.

Note that where the base member 1 is of a material that thermally shrinks, the base member 1 may be heated after the attachment, thereby fitting the base member 1 to the core **50.**

In this state, the core **50** of FIG. **8C** is loaded onto the outer mold **61, 62,** and the core **50** is supported by the outer mold **61, 62.**

Note that the core **50** is loaded onto the lower outer mold 61 with the core **50** positioned so that the core print **51** (FIG. **8B**) is below the last portion **52,** after which the upper outer mold **62** is meshed onto the outer mold 61, and the molds are clamped together.

After the clamping, a molten resin **71** or **72** to be the reinforcement member 2 or the midsole member 3 is supplied into between the outer mold **61, 62** and the base member 1 as shown in FIG. **8D****.** Then, the molten resin **71** or **72** is cooled and allowed to cure, and the intermediate shoe product having the reinforcement member 2 or the midsole member 3 integrally formed with the base member 1 is taken out of the mold as shown in FIG. **8E****.**

In this case, the base member 1 may become buried in the inner surface of the reinforcement member 2 or the midsole member 3. Therefore, if a reinforcement fiber is provided woven in portions of the base member 1, the reinforcement member 2 or the midsole member 3 may be reinforced by the fiber.

Note that after the molding, the lacing apertures **20A** may be formed by a machining process in the area of the ornamental eyelet 21.

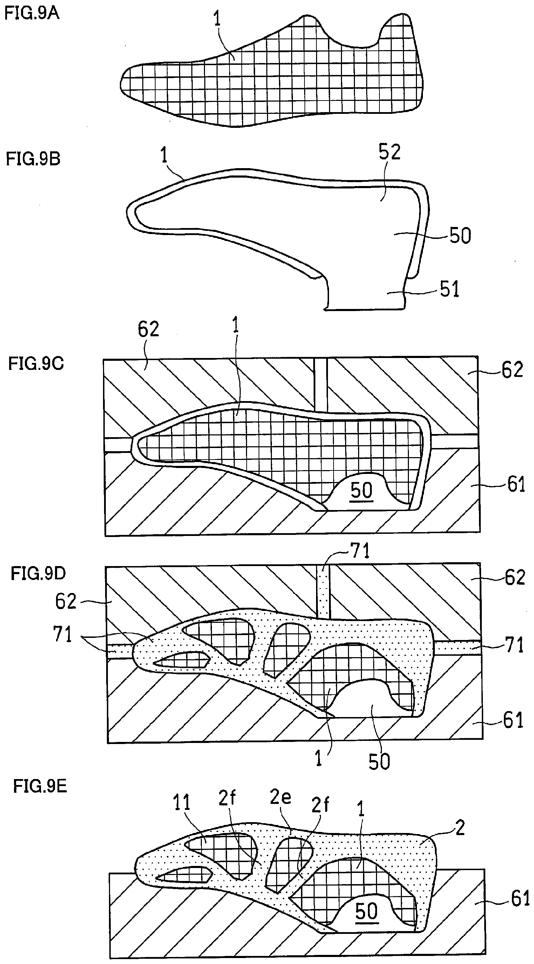

Next, an example of a method for manufacturing a shoe in which the reinforcement member 2 is welded to the base member 1, and the midsole member 3 is further welded to the reinforcement member 2, as shown in FIGS. **2A** to **4B****,** will be described with reference to FIGS. **9A** to **10C****.**

In this case, steps similar to those shown in FIGS. **8A** to **8D** are performed as shown in FIGS. **9A** to **9D****,** but as for the molten resin, the molten resin 71 to form the reinforcement member 2 is supplied, thereby first reaching a state where the reinforcement member 2 is welded to the base member 1.

That is, as shown in FIGS. **9C** and **9D****,** a first supply step is performed for supplying the first molten resin **71** to be the reinforcement member 2 into between the first outer mold **61** and the second outer mold **62,** which mesh with each other, and the last portion **52.** Then, the first molten resin **71** is allowed to cure, thereby forming the reinforcement member 2 integral with the base member 1.

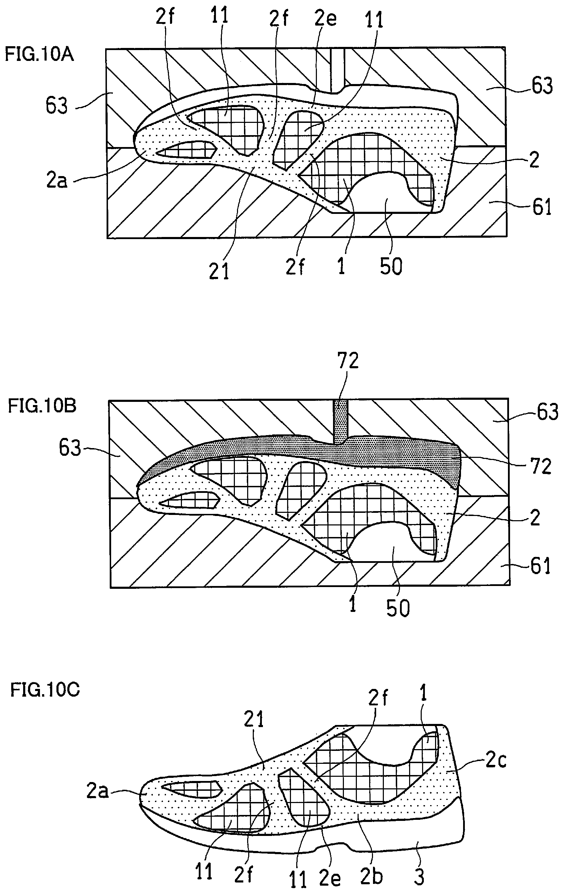

Then, as shown in FIGS. **9D** and **9E****,** the second outer mold **62** is removed from the first outer mold **61,** and the third outer mold **63,** which meshes with the first outer mold **61,** is meshed onto the first outer mold **61,** replacing the second outer mold **62,** as shown in FIG. **10A****.**

In the step of meshing the third outer mold **63** after the first supply step, the second outer mold **62** of FIG. **9D** is removed, with the core print **51** of FIG. **9B** remaining attached to the first outer mold **61,** and the third outer mold **63** of FIG. **10A** is meshed onto the first outer mold **61,** replacing the second outer mold **62.**

After the meshing, a second supply step of supplying the second molten resin **72** to be the midsole member 3 or the outsole member 4 into between the third outer mold **63** and the last portion **52** is performed as shown in FIG. **10B****.** Then, the second molten resin 72 cures, thereby forming the midsole member 3 integral with the reinforcement member 2. Thus, there is obtained a shoe of FIG. **10C****,** in which the base member 1, the reinforcement member 2 and the midsole member 3 are integral together. Note that the outsole is thereafter bonded to the bottom surface of the midsole member 3.

In the manufacturing method, in a case where the upper edge portion 31 of the midsole member 3 is left unwelded to the base member 1 as shown in FIG. **6C****,** a release agent may be applied to the surface of the base member 1 and the last portion **52.**

On the other hand, in a case where the upper edge portion 31 of the midsole member 3 is welded to the base member 1 as shown in FIG. **6D****,** a thread of a material having a good affinity with the midsole member 3 may be provided woven in the base member 1.

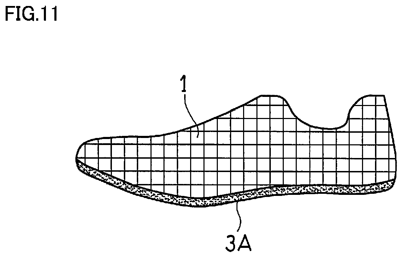

Next, another manufacturing method will be described with reference to FIG. 11.

First, a sock-shaped shoe member is provided, including a sock-shaped base member 1 made of a knit fabric and/or a woven fabric and forming a portion of an upper, and a sole member 3A made of a knit fabric and/or a woven fabric and integral with the base member 1.

The sock-shaped shoe member is attached to a last and heated, thereby forming a sock portion and heating and welding the sole member 3A during the heating. Then, the shoe member is removed from the last, thereby producing a shoe reinforced with a fiber.

While preferred examples have been described above with reference to the drawings, various obvious changes and modifications will readily occur to those skilled in the art upon reading the present specification.

For example, after molding and welding the midsole member 3 of FIG. **10B****,** the outsole member 4 made of a urethane resin, or the like, may be molded and welded by a similar method.

The outsole member 4, instead of the midsole member 3, may be welded, through molding, to the base member 1.

The reinforcement member 2 and the midsole member 3 may be an FRP containing a reinforcement fiber.

For the molding method of FIGS. **8A** to **10C****,** another molding method, called VARTM or RTM, may be used, as well as an injection molding method and a compression molding method using a mold. Moreover, when the reinforcement member or the midsole member is molded, another reinforcement member for reinforcing the arch of the middle foot section may be provided by insert molding.

### INDUSTRIAL APPLICABILITY

The present invention is applicable to shoes having the base member 1 of a small rigidity.

### REFERENCE SIGNS LIST

1: Base member
10A: Lacing aperture, 11: Enclosed portion, 12: Upper
2: Reinforcement member, 2a: Front foot portion, 2b: Middle foot portion, 2c: Rear foot portion, 2d: Bottom portion, 2e: Lower portion
2f Side surface portion, 2g: Top line portion
20: Loop, 20A: Lacing aperture, 21: Ornamental eyelet
22: Top line portion
3: Midsole member, 3e: Roll-up lower portion, 3f Side surface portion
30A: Lacing aperture, 31: Upper edge portion, 32: Top line portion, 33: Heel counter
4: Outsole member
50: Core, 51: Core print, 52: Last portion
61: First outer mold, 62: Second outer mold, 63: Third outer mold
71: First molten resin, 72: Second molten resin

## Claims

1. A method for manufacturing a shoe, the method comprising the steps of
attaching a sock-shaped base member (1) forming a portion of an upper to a last portion (52) of a core (50), the core (50) including a core print (51) and the last portion (52);
loading the core (50) onto an outer mold (61, 62);
supplying a molten resin (71, 72) to be a reinforcement member (2) and/or a sole member (3, 4) into between the outer mold (61, 62) and the base member (1); and
allowing the molten resin (71, 72) to cure, thereby forming the reinforcement member (2) and/or the sole member (3, 4) integral with the base member (1),
**characterized in that** the base member (1) is of a material that thermally shrinks, the base member (1) is heated after the attaching step, thereby fitting the base member (1) to the core (50).

2. A manufacturing method according to claim 1, wherein in the step of loading the core (50), the core print (51) of the core (50) is supported by the outer mold (61, 62), with the core print (51) protruding from a top line of the base member (1).

3. A manufacturing method according to claim 2, wherein the loading step is performed with the core (50) positioned so that the core print (51) is below the last portion (52).

4. A manufacturing method according to claim 3, wherein:
the outer mold (61, 62) includes a first outer mold (61), to which the core print (51) is attached, and a second outer mold (62) meshing with the first outer mold (61), the method comprising:
a first supply step of supplying a first molten resin (71) to be the reinforcement member (2) into between the first outer mold (61) and the second outer mold (62) and the last portion (52);
a step of allowing the first molten resin (71) to cure, thereby forming the reinforcement member (2) integral with the base member (1);
a step of meshing a third outer mold (63), which meshes with the first outer mold (61), onto the first outer mold (61), replacing the second outer mold (62);
a second supply step of supplying a second molten resin (72) to be the sole member (3, 4) into between the third outer mold (63) and the last portion (52); and
a step of allowing the second molten resin (72) to cure, thereby forming the sole member (3, 4) integral with the base member (1).

5. A manufacturing method according to claim 4, wherein in the meshing step after the first supply step, the second outer mold (62) is removed, with the core print (51) remaining attached to the first outer mold (61), and the third outer mold (63) is meshed onto the first outer mold (61), replacing the second outer mold (62).

## Patentansprüche

1. Verfahren zur Herstellung eines Schuhs, wobei das Verfahren die Schritte aufweist:
Befestigen eines sockenförmigen Grundteils (1), das einen Abschnitt eines Schafts bildet, an einem Leistenabschnitt (52) eines Kerns (50), wobei der Kern (50) eine Kernmarke (51) und den Leistenabschnitt (52) aufweist;
Aufgeben des Kerns (50) auf eine Außenform (61, 62);
Zuführen einer Harzschmelze (71, 72), die zu einem Verstärkungsteil (2) und/oder einem Sohlenteil (3, 4) werden soll, in den Raum zwischen der Außenform (61, 62) und dem Grundteil (1); und
Härtenlassen der Harzschmelze (71, 72), wodurch das Verstärkungsteil (2) und/oder das Sohlenteil (3, 4) in einem Stück mit dem Grundteil (1) gebildet wird,
**dadurch gekennzeichnet, dass** das Grundteil (1) aus einem Material besteht, das thermisch schrumpft, und das Grundteil (1) nach dem Befestigungsschritt erwärmt wird, wodurch das Grundteil (1) auf den Kern (50) aufgepasst wird.

2. Herstellungsverfahren nach Anspruch 1, wobei im Schritt des Aufgebens des Kerns (50) die Kernmarke (51) des Kerns (50) durch die Außenform (61, 62) gestützt wird, wobei die Kernmarke (51) von einer Schaftabschlusskante des Grundteils (1) vorsteht.

3. Herstellungsverfahren nach Anspruch 2, wobei der Aufgabeschritt mit dem Kern (50) so positioniert durchgeführt wird, dass die Kernmarke (51) unter dem Leistenabschnitt (52) liegt.

4. Herstellungsverfahren nach Anspruch 3, wobei:
die Außenform (61, 62) eine erste Außenform (61), an der die Kernmarke (51) befestigt ist, und eine zweite Außenform (62) aufweist, die einen Eingriff mit der ersten Außenform (61) herstellt, wobei das Verfahren aufweist:
einen ersten Zufuhrschritt des Zuführens einer ersten Harzschmelze (71), die zum Verstärkungsteil (2) werden soll, in den Raum zwischen der ersten Außenform (61) und der zweiten Außenform (62) sowie dem Leistenabschnitt (52);
einen Schritt des Härtenlassens der ersten Harzschmelze (71), wodurch das Verstärkungsteil (2) in einem Stück mit dem Grundteil (1) gebildet wird;
einen Schritt des In-Eingriff-bringens einer dritten Außenform (63), die einen Eingriff mit der ersten Außenform (61) herstellt, auf der ersten Außenform (61), wobei sie die zweite Außenform (62) ersetzt;
einen zweiten Zufuhrschritt des Zuführens einer zweiten Harzschmelze (72), die zum Sohlenteil (3, 4) werden soll, in den Raum zwischen der dritten Außenform (63) und dem Leistenabschnitt (52); und
einen Schritt des Härtenlassens der zweiten Harzschmelze (72), wodurch das Sohlenteil (3, 4) in einem Stück mit dem Grundteil (1) gebildet wird.

5. Herstellungsverfahren nach Anspruch 4, wobei im Schritt des In-Eingriff-bringens nach dem ersten Zufuhrschritt die zweite Außenform (62) entfernt wird, wobei die Kernmarke (51) an der ersten Außenform (61) angebracht bleibt, und die dritte Außenform (63) auf der ersten Außenform (61) in Eingriff gebracht wird, wobei sie die zweite Außenform (62) ersetzt.

## Revendications

1. Procédé de fabrication d'une chaussure, le procédé comprenant les étapes de :
fixation d'un élément de base en forme de chaussette (1) formant une portion d'une tige de chaussure à une portion de forme pour chaussure (52) d'un noyau (50), le noyau (50) incluant une impression de noyau (51) et la portion de forme pour chaussure (52) ;
de charge du noyau (50) sur un moule externe (61, 62) ;
d'introduction d'une résine fondue (71, 72) afin qu'elle soit un élément de renforcement (2) et/ou un élément de semelle (3, 4) entre le moule externe (61, 62) et l'élément de base (1) ; et
de laisser la résine fondue (71, 72) durcir, formant par-là l'élément de renforcement (2) et/ou l'élément de semelle (3, 4) en une seule pièce avec l'élément de base (1),
**caractérisé en ce que** l'élément de base (1) est constitué d'un matériau qui rétrécit thermiquement, l'élément de base (1) est chauffé après l'étape de fixation, fixant par-là l'élément de base (1) au noyau (50).

2. Procédé de fabrication selon la revendication 1, dans lequel dans l'étape de charge du noyau (50), l'impression de noyau (51) du noyau (50) est supportée par le moule externe (61, 62), avec l'impression de noyau (51) faisant saillie à partir d'une ligne supérieure de l'élément de base (1).

3. Procédé de fabrication selon la revendication 2, dans lequel l'étape de charge est réalisée avec le noyau (50) positionné de sorte que l'impression de noyau (51) est sous la portion de forme pour chaussure (52).

4. Procédé de fabrication selon la revendication 3, dans lequel :
le moule externe (61, 62) comprend un premier moule externe (61), sur lequel l'impression de noyau (51) est fixée, et un second moule externe (62) s'accouplant avec le premier moule externe (61), le procédé comprenant :
une première étape d'introduction introduisant une première résine fondue (71) afin qu'elle soit l'élément de renforcement (2) entre le premier moule externe (61) et le second moule externe (62) et la portion de forme pour chaussure (52) ;
une étape de laisser la première résine fondue (71) durcir, formant par-là l'élément de renforcement (2) d'une seule pièce avec l'élément de base (1) ;
une étape d'accouplement d'un troisième moule externe (63), qui s'accouple avec le premier moule externe (61), sur le premier moule externe (61), remplaçant le second moule externe (62) ;
une seconde étape d'introduction introduisant une seconde résine fondue (72) pour qu'elle soit l'élément de semelle (3, 4) entre le troisième moule externe (63) et la portion de forme pour chaussure (52) ; et
une étape de laisser la seconde résine fondue (72) durcir, formant par-là l'élément de semelle (3, 4) d'une seule pièce avec l'élément de base (1).

5. Procédé de fabrication selon la revendication 4, dans lequel dans l'étape d'accouplement après la première étape d'introduction, le second moule externe (62) est prélevé, avec l'impression de noyau (51) restant fixé au premier moule externe (61), et le troisième moule externe (63) est accouplé sur le premier moule externe (61), remplaçant le second moule externe (62).
